# EUROPÄISCHE PATENTSCHRIFT

(11) **EP 1 223 369 B1**
(45) Veröffentlichungstag und Bekanntmachung des Hinweises auf die Patenterteilung: **28.09.2005**
(21) Anmeldenummer: 01129589.6
(22) Anmeldetag: 12.12.2001
(51) Int. Cl.: F16J 15/08

(54) **Metallische Zylinderkopfdichtung**
Metallic cylinder head gasket
Joint de culasse métallique

(30) Priorität: 16.01.2001 DE 10101604
(43) Veröffentlichungstag der Anmeldung: 17.07.2002
(73) Patentinhaber: Federal-Mogul Sealing Systems GmbH, 57562 Herdorf (DE)
(72) Erfinder: Heilig, Markus, 57518 Betzdorf (DE); Hilgert, Christoph, 51491 Overath (DE); Audibert, Fabrice, 69630 Chaponost (FR); Schmitt, Klaus, 57520 Grünebach (DE)

(56) Entgegenhaltungen:
- EP-A- 1 065 417

## Beschreibung

Die Erfindung betrifft eine metallische Zylinderkopfdichtung aufweisend mindestens eine Dichtungslage und eine Distanzlage mit Öffnungen entsprechend den Brennkammern bei Brennkraftmaschinen, einem flachen Abschnitt, der um die Öffnungen herum angeordnet ist, wobei die Dichtungslage eine Sicke mit einem inneren und einem äußeren Sickenfuß und einer Sickenspitze aufweist (Vollsicke), die benachbart dem flachen Abschnitt die Öffnungen umschließt, wobei die Distanzlage mit einer Ringauflage versehen ist, deren innere Stirnfläche am Rand der Öffnungen ausgerichtet ist und deren äußere Stirnfläche sich radial bis in den Bereich der Sickenspitze der Vollsicke erstreckt.

Das Dichtungsprinzip metallischer Flachdichtungen beruht auf dem Vorhandensein von einer elastischen Dichtzone. Um den Bereich der Brennkammern werden deshalb einzelne Lagen der Flachdichtung mit Sicken versehen, die elastische Dichtzonen bilden. Die Sicken unterliegen im Betrieb ständigen Pressungsänderungen. Die Federkraft oder Federsteifigkeit der Sicken wird durch die Form der Sicke und durch die Materialstärke der Metalllage beeinflußt. Insgesamt läßt sich die Federkennlinie der Sicken nur in engen Grenzen verändern. Der Bereich um die Brennraumkammern unterliegt im Betrieb der Brennkraftmaschine einer höheren Belastung als der Restflächenbereich der Flachdichtung. Um diesen Bereich sicher abzudichten, ist es notwendig, dort eine hohe Flächenpressung aufzubringen. Dieses geschieht dadurch, dass man am Brennraumrand die Materialstärke der Flachdichtung erhöht. Dieses erfolgt beispielsweise durch Umfalten einer Metalllage oder durch den Einsatz von separaten Auflagen, die mit einer der Metalllagen verbunden werden. Gleichzeitig wird in vielen Anwendungsfällen die Materialverdickung so gelegt, dass sie die Sicken im eingebauten Zustand gegen ein vollständiges Plattdrücken schützen.
Aus der DE 19751293 A1 ist eine solche Flachdichtung zu entnehmen. Der umgelegte Falz stellt für die Sicke einen Pressungbegrenzer dar und bildet eine Zone mit hoher Presskraft. Die Sicke liegt aber im Kraftnebenschluß, d.h. maximale Pressung erfolgt im Bereich der Materialverdickung und nicht im Bereich der Sicke. Dieses Dichtungskonzept hat sich bei Dieselmotoren bewährt.
Bei PKW Ottomotoren ist man schon von diesem Konzept abgewichen und hat vollständig auf einen Pressungbegrenzer verzichtet. Die Zylinderkopfdichtungen weisen dann nur Sicken auf, die die Brennkammern umschließen. Die Sicken sind im eingebauten Zustand vollständig abgeflacht und nehmen die maximale Pressung auf, d.h. die Sicken liegen im Krafthauptschluß.
Aus der EP 0574166 B 1 ist eine Kombination beider Konstruktionsvarianten offenbart. Diese gattungsgemäße Flachdichtung weist eine Ringauflage auf, die im eingebauten Zustand bis in den Bereich der Vollsicke der Dichtungslage reicht. Durch diese Konstruktion liegt die Sicke im Krafthauptschluß. Diese Konstruktion ist insbesondere geeignet bei Motoren mit geringen Stegbreiten zwischen den einzelnen Brennkammern und ermöglicht dennoch die Konzentration der maximalen Pressung auf den Bereich um die Brennkammern.
Dadurch, dass die Ringauflage aber der Kontur der Sicke folgt und nicht über die Sickenspitze hinaus ragt, wird die Federkennlinie der Sicke verändert, die Sicke wird härter und verliert somit an Elastizität. Darüber hinaus liegt im eingebauten Zustand eine extreme Kontaktpressungspitze im Bereich der Sickenspitze. Diese Stelle stellt quasi den Auflagepunkt für eine Biegebalkenkonstruktion dar. Als Folge tritt bei Druckbeaufschlagung ein Abrolleffekt über die Sickenspitze auf, mit der Folge, dass in vertikaler Richtung hohe Schwingungsamplituden auftreten. Dieser Effekt verstärkt sich in Abhängigkeit von den Drücken im Brennraum.

EP 1 065 417 A2 offenbart eine Zylinderkopfdichtung gemäß dem Oberbegriff des Anspruchs 1.

Der Erfindung liegt die Aufgabe zugrunde, eine Flachdichtung mit einer dynamische Dichtzone im Krafthauptschluß zu schaffen, die eine hohe Elastizität aufweist, so dass die Flachdichtung für hochbelastete Dieselmotoren einsetzbar ist.

Diese Aufgabe wird erfindungsgemäß durch die Merkmale des Patentanspruchs 1 gelöst.

Vorteilhafte Ausgestaltungen der Erfindung sind in den Unteransprüchen dokumentiert.

Durch die erfindungsgemäße Ausbildung der Flachdichtung wird einerseits die Federkennlinie im eingebauten Zustand nicht verändert und andererseits wird die Kontakpressungsspitze in den Bereich des äußeren Sickenfuß verlagert. Die angrenzende Halbsicke übernimmt einen Teil der Kontaktpressungsspitze, wodurch sich dann insgesamt eine niedrigere Belastung für die Vollsicke ergibt.
Die Kombination der erfindungsgemäßen Merkmale ist geeignet, die statische Pressungssituation deutlich zu verbessern. Die vertikale Dichtspaltbewegung im Bereich der Vollsicke wird wesentlich verringert und dadurch die Lebensdauer der Flachdichtung positiv beeinflußt.

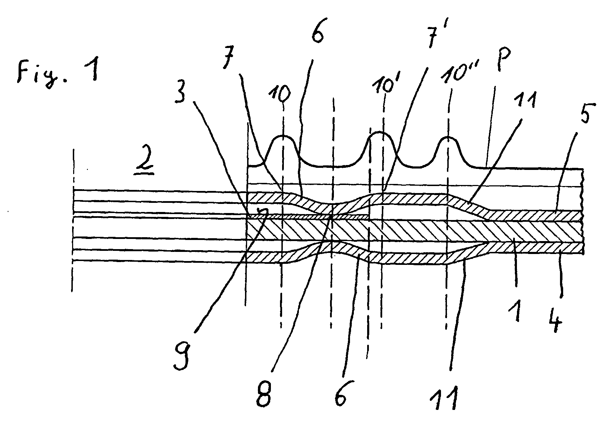

Die Figur 1 zeigt ein Querschnittsbild von einer mehrlagigen metallischen Zylinderkopfdichtung mit einer erfindungsgemäßen Ringauflage.

In Figur 1 ist auf die zentrale Distanzlage 1 am Rand der Öffnung 2, entsprechend den Brennkammern bei Brennkraftmaschinen, eine druckfeste Ringauflage 3 angeordnet. Die beiden aufliegenden Dichtungslagen 4, 5 sind mit Abstand zur Öffnung 2 gesickt, es handelt sich hierbei um eine Vollsicke 6 mit einem inneren Sickenfuß 7 und einem äußeren Sickenfuß 7' und einer Sickenspitze 8. Oberhalb der Zylinderkopfdichtung ist schematisch ein Pressungsverlauf P dargestellt, wie er sich im eingebauten Zustand der Zylinderkopfdichtung ergeben würde.

Die Ringauflage 3 erstreckt sich vom Rand der Öffnung 2 bis zwischen die Sickenspitze 8 und den äußeren Sickenfuß 7'. Die Sickenspitze 8 stützt sich auf der Ringauflage 3 ab. Die Ringauflage 3 weist eine ebene, plane Oberfläche 9 auf, die Vollsicke liegt auf diese Weise im Krafthauptschluß. Der angenommene Auflagepunkt der Biegebalkenkonstruktion (im Querschnitt) wird so verschoben, dass er in den Bereich des Umkehrpunktes der Vollsickenkontur rückt. Da in diesem Bereich kein inniger Kontakt der Dichtungslagen-Innenseite mit der Außenkante der Ringauflage zustande kommt, wird die Pressungsspitze egalisiert und die Abrollbewegung wesentlich verringert. Im Bereich der Sickenfüße 7, 7' ergeben sich dadurch hohe Pressungsdrücke 10, 10'.

Benachbart zum äußeren Sickenfuß 7' ist eine Halbsicke 11 angeordnet. Durch die Einführung der Halbsicke 11 wird ein zusätzlicher Abstützeffekt erzeugt mit einem Pressungsdruck 10" entspricht, der den Pressungsdrücken 10, 10'. Auf diese Weise tritt kein Abrolleffekt über die Sickenspitze 8 auf.

## Patentansprüche

1. Metallische Zylinderkopfdichtung aufweisend mindestens eine Dichtungslage (4,5) und eine Distanzlage (1) mit Öffnungen (2) entsprechend den Brennkammern bei Brennkraftmaschinen, einem flachen Abschnitt (12), der um die Öffnungen (2) herum angeordnet ist, wobei die Dichtungslage (4, 5) eine Vollsicke (6) mit einem inneren und einem äußeren Sickenfuß (7, 7') und einer Sickenspitze (8) aufweist, die benachbart dem flachen Abschnitt (12) die Öffnungen (2) umschließt, wobei die Distanzlage (1) mit einer Ringauflage (3) versehen ist, deren innere Stirnfläche am Rand der Öffnungen (2) ausgerichtet ist und deren äußere Stirnfläche sich radial bis in den Bereich der Sickenspitze (8) der Vollsicke erstreckt, wobei die Ringauflage (3) eine dem flachen Abschnitt (12) angepaßte plane Oberfläche (9) aufweist, auf den die Vollsicke im eingebauten Zustand aufliegt und wobei benachbart zum äußeren Sickenfuß (7') der Vollsicke eine Halbsicke (11) angeordnet ist, **dadurch gekennzeichnet, dass** die äußere Stirnfläche der Ringauflage (3) sich mindestens radial über die Sickenspitze (8) und maximal bis zum äußeren Sickenfuß (7') der Vollsicke erstreckt und dass die Ringauflage (3) mit der Distanzlage (1) verbunden ist.

2. Metallische Zylinderkopfdichtung nach Anspruch 1, **dadurch gekennzeichnet, dass** die Sickenspitze (8) der Vollsicke (6) in Richtung der Ringauflage (3) gerichtet ist.

3. Metallische Zylinderkopfdichtung nach den Ansprüchen 1 und 2, **dadurch gekennzeichnet, dass** der radiale Abstand zwischen dem äußeren Sickenfuß (7') und der Halbsicke (11) zwischen 0,5 mm und 2,0 mm beträgt.

4. Metallische Zylinderkopfdichtung nach den Ansprüchen 1 bis 3, **dadurch gekennzeichnet, dass** die Ringauflage (3) mit der Dichtungslage (1) verschweißt ist.

5. Metallische Zylinderkopfdichtung nach den Ansprüchen 1 bis 4, **dadurch gekennzeichnet, dass** die Dicke der Ringauflage (3) zwischen 0,05 mm und 0,20 mm beträgt.

## Claims

1. Metal cylinder head gasket which has at least one sealing layer (4, 5) and one spacer layer (1), with apertures (2) corresponding to the combustion chambers in internal combustion engines, a flat portion (12), which is arranged around the apertures (2), the sealing layer (4, 5) having a full bead (6) with an inner and an outer bead foot (7, 7') and a bead tip (8), which full bead surrounds the apertures (2) adjacent to the flat portion (12), the spacer layer (1) being provided with an annular overlay (3), the inner end face of which is aligned at the edge of the apertures (2) and the outer end face of which extends radially as far as the region of the tip (8) of the full bead, the annular overlay (3) having a planar surface (9) adapted to the flat portion (12), on which the full bead rests in the fitted state, and a half-bead (11) being arranged adjacent to the outer bead foot (7') of the full bead, **characterised in that** the outer end face of the annular overlay (3) extends at least radially over the bead tip (8) and at the most as far as the outer bead foot (7') of the full bead, and **in that** the annular overlay (3) is connected to the spacer layer (1).

2. Metal cylinder head gasket according to claim 1, **characterised in that** the tip (8) of the full bead (6) is directed in the direction of the annular overlay (3).

3. Metal cylinder head gasket according to claims 1 and 2, **characterised in that** the radial spacing between the outer bead foot (7') and the half-bead (11) is between 0.5 mm and 2.0 mm.

4. Metal cylinder head gasket according to claims 1 to 3, **characterised in that** the annular overlay (3) is welded to the sealing layer (1).

5. Metal cylinder head gasket according to claims 1 to 4, **characterised in that** the thickness of the annular overlay (3) is between 0.05 mm and 0.20 mm.

## Revendications

1. Joint de culasse métallique comportant au moins une couche d'étanchéité (4, 5) et une couche d'écartement (1) avec des orifices (2), correspondant aux chambres de combustion d'un moteur à combustion interne, avec une section plate (12) qui est disposée autour des orifices (2), la couche d'étanchéité (4, 5) comportant une moulure pleine (6), avec un pied de moulure intérieur et extérieur (7, 7') et une pointe de moulure (8), qui à proximité de la section plate (12) entoure les orifices (2), la couche d'écartement (1) étant munie d'un appui annulaire (3), dont la surface frontale intérieure est dirigée vers le bord des orifices (2) et dont la surface frontale extérieure s'étend en direction radiale jusque dans la zone de la pointe de moulure (8) de la moulure pleine (6), l'appui annulaire (3) comportant une surface plane (9) adaptée à la section plate (12), sur laquelle la moulure pleine repose à l'état monté et une demie moulure (11) étant disposée au voisinage du pied de moulure extérieure (7') de la moulure pleine, **caractérisé en ce que** la surface frontale extérieure de l'appui annulaire (3) s'étend au moins en direction radiale par-dessus la pointe de moulure (8) et au maximum jusqu'au pied extérieur de la moulure (7') de la moulure pleine et **en ce que** l'appui annulaire (3) est relié à la couche d'écartement (1).

2. Joint de culasse métallique selon la revendication 1, **caractérisé en ce que** la pointe de moulure (8) de la moulure pleine (6) est tournée en direction de l'appui annulaire (3).

3. Joint de culasse métallique selon les revendications 1 et 2, **caractérisé en ce que** la distance radiale entre le pied de moulure extérieur (7') et la demi moulure (11) est comprise entre 0,5 mm et 2,0 mm.

4. Joint de culasse métallique selon l'une quelconque des revendications 1 à 3, **caractérisé en ce que** l'appui annulaire (3) est soudé sur la couche d'étanchéité (1).

5. Joint de culasse métallique selon l'une quelconque des revendications 1 à 4, **caractérisé en ce que** l'épaisseur de l'appui annulaire (3) est comprise entre 0,05 mm et 0,20 mm.
